# EUROPÄISCHE PATENTANMELDUNG

(11) **EP 1 641 319 A2**
(43) Veröffentlichungstag der Anmeldung: **29.03.2006**
(21) Anmeldenummer: 05018971.1
(22) Anmeldetag: 01.09.2005
(51) Int. Cl.: H05B 3/00

(54) **Mikromechanisch hergestellter Infrarotstrahler**

(30) Priorität: 24.09.2004 DE 102004046705
(71) Anmelder: EADS Deutschland GmbH, 85521 Ottobrunn (DE); Farside Technology PLC, Slough SL3 7RP (GB)
(72) Erfinder: Müller, Gerhard, Dr., 85567 Grafing (DE); Schulz, Olaf, 80337 München (DE); Ahlers, Simon, 82194 Gröbenzell (DE); Spannhake, Jan, 85521 Ottobrunn (DE); Lloyd, Martin, Dr., Reading Berkshire RG30 2AN (GB)

(57) **Zusammenfassung**

Ein mikromechanisch hergestellter Infrarotstrahler weist eine in einem Träger-Chip (10) gehalterte Strahlerfläche (14) auf. Die Strahlerfläche ist durch eine Heizeinrichtung beheizbar. Die Heizleistung ist in Abhängigkeit von einer Temperaturmessung so regelbar, dass die Strahlerfläche (14) eine vorgegebene Temperatur annimmt. Dabei ist zur unmittelbaren Temperaturmessung ein ebenfalls mikromechanisch hergestellter Temperaturfühler (20) in Form eines Metallwiderstandes in der Strahlerfläche integriert.

## Beschreibung

Die Erfindung betrifft einen mikromechanisch hergestellten Infrarotstrahler mit einer in einem Träger-Chip gehalterten Strahlerfläche, die durch eine Heizeinrichtung beheizbar ist, wobei die Heizleistung in Abhängigkeit von einer Temperaturmessung so regelbar ist, dass die Strahlerfläche eine vorgegebene Temperatur annimmt.

Solche Infrarotstrahler werden beispielsweise in Gassensoren verwendet. Für solche Anwendungen ist es wichtig, dass der Infrarotstrahler auf der Strahlerfläche eine genau definierte Strahlung aussendet. Die Strahlerfläche stellt praktisch einen schwarzen Strahler dar. Die ausgesandte Strahlung hängt von der Temperatur der Strahlerfläche ab. Diese Temperatur wird wiederum durch Umgebungseinflüsse beeinflusst. Diese Umgebungseinflüsse sind die Umgebungstemperatur, die relative Feuchtigkeit der umgebenden Atmosphäre und die Strömungsgeschwindigkeit in der umgebenden Atmosphäre. Die zugeführte Heizleistung wird abgeführt durch Festkörper-Wärmeleitung, Wärmeleitung in der Umgebungsluft, Konvektion und thermische Strahlung. Im Gleichgewichtszustand stellt sich eine Temperatur der Strahlerfläche ein, bei welcher zugeführte und abgeführte Leistung gleich sind. Die Festkörper-Wärmeleitung hängt ab von der Temperaturdifferenz zwischen Strahlerfläche und Träger-Chip und damit von der Umgebungstemperatur. Die Wärmeleitung über die Umgebungsluft hängt ab von der mittleren Molekülmasse in dem Luftpolster zwischen der heißen Strahlerfläche und umgebenden kälteren Flächen. Diese mittlere Molekülmasse sinkt wegen des leichteren Wassermoleküls mit zunehmender relativer Luftfeuchtigkeit.

Es ist bekannt, eine Strahlerfläche mittels der Heizeinrichtung mit einer konstanten Heizleistung zu beaufschlagen. Durch die vorstehend geschilderten Einflüsse treten dann von den Umgebungseinflüssen abhängige Schwankungen der Temperatur der Strahlerfläche auf.

Es ist weiter bekannt, den Heizwiderstand auf einen konstanten Wert zu regeln. Der Heizwiderstand ist nach einer bekannten Funktion temperaturabhängig. Regelt man den Heizwiderstand auf einen vorgegebenen konstanten Wert, dann ergibt sich auch eine diesem Wert zugeordnete konstante Temperatur. Bei bekannten Strahlern der vorliegenden Art werden jedoch für den Heizwiderstand hochdotierte Halbleiter verwendet, bei denen die Temperaturabhängigkeit des Widerstandes sehr gering und schwer reproduzierbar ist.

Der Erfindung liegt die Aufgabe zugrunde, bei einem mikromechanisch hergestellten Infrarotstrahler der eingangs genannten Art auf einfache Weise eine definierte, konstante Strahlungsleistung der Strahlerfläche zu gewährleisten.

Erfindungsgemäß wird diese Aufgabe dadurch gelöst, dass zur unmittelbaren Temperaturmessung ein ebenfalls mikromechanisch hergestellter Temperaturfühler in Form eines Metallwiderstandes mit der Strahlerfläche integriert ist.

Dadurch erfolgt eine direkte und einfache Temperaturmessung. Mit einem Metallwiderstand, z.B. einem Widerstand aus Platin, ergibt sich eine hinreichend starke, lineare Änderung des Widerstandswertes mit der Temperatur. Die erhaltene Charakteristik ist unveränderlich und gut reproduzierbar. Auf diese Weise kann die Temperatur und damit auch die Strahlung der Strahlerfläche durch Veränderung der Heizleistung als Stellgröße genau geregelt werden. Es hat sich gezeigt, dass ein solcher Metallwiderstand mit der Strahleroberfläche integriert werden kann.

Vorteilhafterweise ist der Temperaturfühler eine gerade Widerstandsleiste, die sich quer über die Strahlerfläche erstreckt. Die Strahlerfläche kann über Haltemittel mit geringer Wärmeableitung in einem Durchbruch des rahmenförmigen Träger-Chips gehalten sein, wobei die den Temperaturfühler bildende Widerstandsleiste sich mit ihren beiden Enden über den Trägerchip erstreckt und dort elektrische Kontakte aufweist. Die Strahlerfläche ist vorteilhaft mit der Heizvorrichtung, dem Träger-Chip und den Haltemitteln als integraler Halbleiter-Bauteil ausgeführt. Der Temperaturfühler kann aus einem hochtemperaturstabilen Material aus der Gruppe: Platin, Chrom oder Nickel bestehen. Weiterhin können Referenzwiderstände mit dem Träger-Chip integriert sein. Diese gestatten eine regelmäßige Kontrolle des Temperaturfühlers und des Heizwiderstandes. Dadurch kann eine Alterung (Widerstandsänderung, Änderung der Emissivität) erkannt werden.

Ein Ausführungsbeispiel der Erfindung ist nachstehend unter Bezugnahme auf die zugehörigen Zeichnungen näher erläutert.
- Fig.1: zeigt schematisch eine Draufsicht auf einen Infrarotstrahler.
- Fig.2: zeigt schematisch einen Schnitt längs der Linie II - II von Fig.1

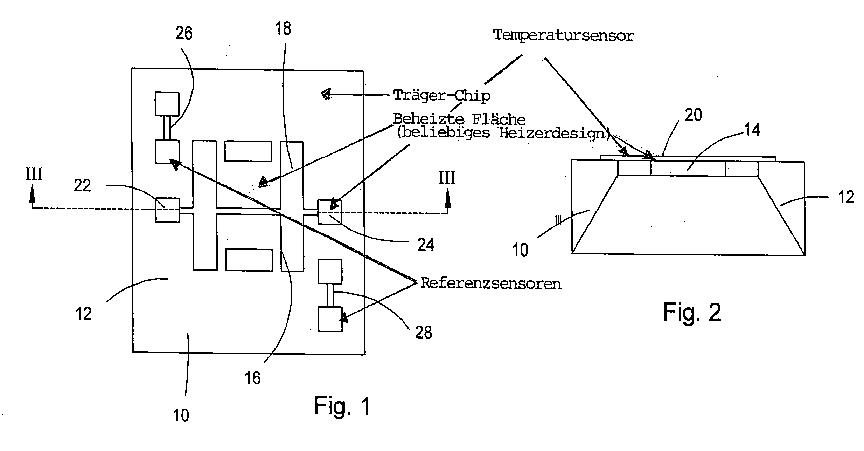

In Fig.1 und 2 ist mit 10 ein Träger-Chip aus einem Halbleiter-Material bezeichnet. Der Träger-Chip 10 bildet einen Rahmen 12 und eine Strahlerfläche 14, welche von einer Heizeinrichtung, z.B. einem mäanderförmigen Heizwiderstand, beheizt wird. Die Strahlerfläche 14 ist über Haltemittel 16 in Form von Stegen mit geringer Wärmeableitung in einem zentralen, quadratischen Durchbruch 18 an dem Rahmen 12 des Träger-Chips 10 gehalten. Die Strahlerfläche mit der Heizvorrichtung, dem Träger-Chip und den Haltemitteln als sind integraler Halbleiter-Bauteil ausgeführt.

Bei dem dargestellten Ausführungsbeispiel ist der Träger-Chip 10 in der Draufsicht quadratisch. Der Träger-Chip bildet den zentralen, quadratischen Durchbruch 18. Zentral in dem Durchbruch 18 sitzt die im wesentlichen quadratische Strahlerfläche 14. Die Stege der Haltemittel 16 erstrecken sich jeweils in der Verlängerung gegenüberliegender Kanten der Strahlerfläche 14. Wie aus Fig.2 ersichtlich ist, ist der Rahmen 12 wesentlich dicker als die Strahlerfläche 14 mit der Heizeinrichtung. Der Durchbruch 18 erweitert sich zu der der Strahlerfläche 14 abgewandten Stirnseite des Träger-Chips 10 hin.

Auf der in Fig.2 oberen Stirnseite des Träger-Chips 10 und der Strahlerfläche 14 ist zur unmittelbaren Temperaturmessung ein ebenfalls mikromechanisch hergestellter Temperaturfühler in Form eines Metallwiderstandes 20 mit der Strahlerfläche 14 integriert. Der Temperaturfühler ist eine gerade Widerstandsleiste 20, die sich quer über die Strahlerfläche 14 erstreckt, sich mit ihren beiden Enden über den Träger-Chip 10 erstreckt und dort elektrische Kontakte 22 und 24 aufweist. Bei der bevorzugten Ausführungsform verläuft die Widerstandsleiste 20 längs einer Symmetrielinie des Träger-Chips 10 und senkrecht zu den Stegen der Haltemittel 16.

Auf der Stirnfläche des Träger-Chips sind weiterhin Referenzwiderstände 26 und 28 mit dem Träger-Chip 10 integriert.

## Patentansprüche

1. Mikromechanisch hergestellter Infrarotstrahler mit einer in einem Träger-Chip (10) gehalterten Strahlerfläche (14), die durch eine Heizeinrichtung beheizbar ist, wobei die Heizleistung in Abhängigkeit von einer Temperaturmessung so regelbar ist, dass die Strahlerfläche (14) eine vorgegebene Temperatur annimmt, **dadurch gekennzeichnet, dass** zur unmittelbaren Temperaturmessung ein ebenfalls mikromechanisch hergestellter Temperaturfühler (20) in Form eines Metallwiderstandes mit der Strahlerfläche (14) integriert ist.

2. Infrarotstrahler nach Anspruch 1, **dadurch gekennzeichnet, dass** der Temperaturfühler (20) eine gerade Widerstandsleiste ist, die sich quer über die Strahlerfläche (14) erstreckt.

3. Infrarotstrahler nach Anspruch 2, **dadurch gekennzeichnet, dass**
(a) die Strahlerfläche (14) über Haltemittel (16) mit geringer Wärmeableitung in einem Durchbruch (18) des rahmenförmigen Träger-Chips (10) gehalten ist und
(b) die den Temperaturfühler (20) bildende Widerstandsleiste sich mit ihren beiden Enden über den Träger-Chip (10) erstreckt und dort elektrische Kontakte (22,24) aufweist.

4. Infrarotstrahler nach Anspruch 3, **dadurch gekennzeichnet, dass** die Strahlerfläche (14) mit der Heizvorrichtung, dem Träger-Chip (10) und den Haltemitteln (16) als integraler Halbleiter-Bauteil ausgeführt ist.

5. Infrarotstrahler nach einem der Ansprüche 1 bis 4, **dadurch gekennzeichnet, dass** der Temperaturfühler (20) aus einem hochtemperaturstabilen Material aus der Gruppe: Platin, Chrom oder Nickel besteht.

6. Infrarotstrahler nach einem der Ansprüche 1 bis 5, **dadurch gekennzeichnet, dass** Referenzwiderstände (26,28) mit dem Träger-Chip (10) integriert sind.
